# FASCICULE DE BREVET EUROPEEN

(11) **EP 3 237 474 B1**
(45) Date de publication et mention de la délivrance du brevet: **18.03.2020**
(21) Numéro de dépôt: 15823638.0
(22) Date de dépôt: 14.12.2015
(51) Int. Cl.: C08F 293/00

(54) **COPOLYMERE DIBLOC HYDROSOLUBLE**
WASSERLÖSLICHES DIBLOCKCOPOLYMER
WATER-SOLUBLE DIBLOCK COPOLYMER

(30) Priorité: 23.12.2014 FR 1463207
(43) Date de publication de la demande: 01.11.2017
(73) Titulaire: Arkema France, 92700 Colombes (FR)
(72) Inventeur: INOUBLI, Raber, 69100 Villeurbanne (FR); BOURRIGAUD, Sylvain, 64340 Morlanne (FR)
(86) Numéro de dépôt international: PCT/FR2015/053465
(87) Numéro de publication internationale: WO 2016/102803

(56) Documents cités:
- EP-A1- 0 947 527
- EP-A1- 1 465 665
- WO-A1-2010/000725
- US-B1- 6 767 968
- US-B2- 7 951 888

## Description

### DOMAINE DE L'INVENTION

La présente invention se rapporte au domaine des copolymères à blocs, particulièrement au domaine des copolymères hydrosolubles ou hydrodispersibles consistant en deux blocs dont le bloc majoritaire est un bloc thermoplastique hydrophile. L'invention concerne également les procédés de préparation desdits copolymères dibloc par polymérisation radicalaire contrôlée. L'invention vise enfin les diverses utilisations de ces copolymères dibloc comme agents dispersants pour pigments, ou encore comme modificateurs de rhéologie dans des applications aussi diverses que les boues de forage, les pâtes d'impression textile, la cosmétique, ou encore la détergence, et autres compositions de revêtement comme la peinture et comme agent antisédimentation et/ou de mise en suspension pour des charges minérales ou organiques grossières dans divers domaines comme par exemple le phytosanitaire.

### ARRIERE-PLAN TECHNIQUE

Les copolymères à blocs représentent une classe de composés ayant des propriétés remarquables pour un grand nombre d'applications.

La demanderesse a déjà décrit dans le document WO 2006/106277 un copolymère séquencé, éthylénique, linéaire comprenant au moins une première séquence A présentant une température de transition vitreuse supérieure à 20°C, au moins une deuxième séquence B présentant une température de transition vitreuse inférieure à 15°C et au moins une troisième séquence C présentant une température de transition vitreuse supérieure à 20°C, ladite première séquence A et troisième séquence C étant identiques ou différentes et l'une au moins d'entre elles comprenant au moins un motif monomère comprenant au moins une fonction carboxyle et/ou carboxylate. La séquence B est majoritaire dans ledit copolymère à blocs, ce qui conduit à l'utilisation de ce dernier en tant qu'adhésif, notamment adhésif thermofusible.

Dans le document EP 1 525 283 la demanderesse a décrit une composition adhésive pour adhésion en milieu humide comprenant comme liant un copolymère à blocs ayant au moins un bloc hydrophile (B) rigide constituant la phase minoritaire dispersée sous la forme de nanodomaines et au moins un bloc hydrophobe (A) à caractère élastomère ayant une capacité d'absorption d'eau inférieure à 20%, constituant la phase majoritaire continue.

D'autres applications requièrent toutefois des copolymères à blocs thermoplastiques aptes à être solubilisés dans l'eau sans présenter des propriétés adhésives.

Il existe donc un besoin de préparer des copolymères à blocs présentant à la fois une température de transition vitreuse (Tg) supérieure à la température ambiante et préférentiellement supérieur à 100°C, une résistance mécanique élevée, exprimée par exemple sous forme d'un module élastique supérieur à 10⁸Pa à température ambiante, qui seraient adaptés à des applications du type agents dispersants ou modificateurs de rhéologie exposées plus haut.

### RESUME DE L'INVENTION

L'invention concerne en premier lieu un copolymère dibloc consistant en :
- un bloc élastomérique, partiellement ou totalement hydrophile, ayant une Tg inférieure à 30°C et comprenant au moins un monomère hydrophile, et
- un bloc thermoplastique hydrosoluble ayant une Tg supérieure à 30°C et comprenant au moins un monomère ayant un groupe carboxyle,
ledit copolymère étant partiellement ou totalement soluble dans l'eau ou en milieu aqueux, et la proportion massique du bloc thermoplastique étant supérieure à 50% du poids dudit copolymère, le dit copolymère étant de structure P(BA-MAMPEG)-b-P(BA- S - AMA) et étant extrudable et granulable.

De manière caractéristique, la proportion massique du bloc thermoplastique est supérieure à 50%, de préférence supérieure ou égale à 60% en poids dudit copolymère. Ceci confère au copolymère à blocs un caractère thermoplastique.

Selon un mode de réalisation, le copolymère dibloc selon l'invention est extrudable et présente un comportement de polymère thermoplastique à température ambiante.

Selon un mode de réalisation, ledit copolymère dibloc est granulable, présentant un module élastique G' supérieur à 10⁵Pa à la température de découpe. Il est connu de l'homme de l'art qu'en dessous d'un certain de niveau de module, il est difficile de granuler un polymère y compris avec une coupe sous eau. Cette limite de module pourrait être liée aux valeurs présentées par le critère de pégosité de Dahlquist puisque en dessous de cette limite (10⁵ Pa), même en utilisant des agents anti-mottants, il ne sera pas possible d'éviter des problèmes de mottage.

De plus, ledit copolymère est partiellement ou totalement soluble dans l'eau ou en milieu aqueux. Selon un mode de réalisation, ledit copolymère est soluble en milieu alcalin ayant un pH supérieur à 8 et préférentiellement supérieur à 10.

Avantageusement, le taux massique de monomères portant des fonctions carboxyle dans le copolymère dibloc varie de 10 à 40%, de préférence de 20 à 35% par rapport au poids dudit copolymère.

L'invention concerne également un procédé de préparation dudit copolymère à blocs par polymérisation radicalaire contrôlée.

Un autre objet de l'invention vise les diverses applications du copolymère à blocs selon l'invention du type : agents dispersants pour pigments, ou encore comme modificateurs de rhéologie dans des applications aussi diverses que les boues de forage, les pâtes d'impression textile, la cosmétique, ou encore la détergence, et autres compositions de revêtement comme la peinture et comme agent antisédimentation et/ou de mise en suspension pour des charges minérales ou organiques grossières dans divers domaines comme par exemple le phytosanitaire.

### BREVE DESCRIPTION DES FIGURES

La figure 1 représente un diagramme illustrant la solubilité des copolymères dibloc selon l'invention en milieu aqueux, mesurée en termes de perte de poids du copolymère en fonction du temps.
La figure 2 représente un diagramme illustrant la variation du module élastique G' d'un copolymère selon l'invention, en fonction de la température.

### DESCRIPTION DE MODES DE REALISATION DE L'INVENTION

L'invention est maintenant décrite plus en détail et de façon non limitative dans la description qui suit.

Selon un premier aspect, l'invention concerne un copolymère formé d'un premier bloc élastomérique et d'un second bloc thermoplastique.

Le premier bloc est un bloc élastomérique ayant une Tg inférieure à 30°C et comprenant au moins un monomère hydrophile. Par « monomère » on entend tout monomère polymérisable ou copolymérisable par voie radicalaire. Le terme "monomère" recouvre les mélanges de plusieurs monomères.

« Tg » désigne la température de transition vitreuse d'un polymère mesurée par DSC selon ASTM E1356. On parle aussi de la Tg d'un monomère pour désigner la Tg de l'homopolymère ayant une masse moléculaire moyenne en nombre Mn d'au moins 10000 g/mol, obtenu par polymérisation radicalaire dudit monomère.

Ledit monomère hydrophile est le méthacrylate de méthoxypolyéthylène glycol (MAMPEG)
Le deuxième bloc est un bloc thermoplastique ayant une Tg supérieure à 30°C. Il comprend au moins un monomère ayant un groupe carboxyle. Ce monomère est l'acide méthacrylique.

Grâce au monomère hydrophile qui comprend des fonctions carboxyle qui sont aptes à établir des liaisons hydrogène avec les molécules d'eau, le bloc thermoplastique est hydrosoluble ou hydrodispersible.

Un polymère est dit « hydrosoluble » s'il est soluble dans l'eau (autrement dit, s'il forme une solution limpide), à raison d'au moins 5% en poids, à 25°C. Ledit bloc thermoplastique est notamment soluble dans eau courante ou eau basique.

Un polymère est dit « hydrodispersible », s'il forme à une concentration de 5%, à 25°C, une suspension stable de fines particules, généralement sphériques. La taille moyenne des particules constituant ladite dispersion est inférieure à 1 µm et, plus généralement, varie entre 5 et 400 nm, de préférence de 10 à 250 nm. Ces tailles de particules sont mesurées par diffusion de lumière.

Le bloc thermoplastique hydrophile est rigide à température ambiante et constitue la phase majoritaire du copolymère à blocs selon l'invention.

Selon un mode de réalisation, le copolymère dibloc selon l'invention possède un module élastique de cisaillement G' supérieur à 10⁸ Pa à température ambiante, ce qui montre que, selon le critère de pégosité de Dahlquist, il n'a pas un caractère collant.

Selon un deuxième aspect, l'invention a trait à un procédé de préparation du copolymère dibloc décrit plus haut. Selon un mode de réalisation, ce copolymère dibloc est obtenu par polymérisation radicalaire contrôlée ou vivante. La polymérisation radicalaire contrôlée permet de réduire les réactions de l'espèce radicalaire en croissance, en particulier l'étape de terminaison, réactions qui dans la polymérisation classique interrompent la croissance de la chaîne polymérique de façon irréversible et sans contrôle des réactions de terminaison. Pour résoudre ce problème et diminuer la probabilité des réactions de terminaison, il a été proposé d'utiliser des espèces radicalaires « dites dormantes », sous forme de liaison de faible énergie de dissociation, susceptibles de bloquer et de redémarrer à volonté la polymérisation. On obtient ainsi selon le besoin des périodes de croissance des espèces radicalaires actives et des périodes d'arrêt de croissance. Cette alternance conduit à une augmentation de la masse moléculaire moyenne selon l'avancement de la réaction tout en contrôlant son déroulement. Ce contrôle peut se traduire par une distribution des masses moléculaires plus étroites (indice de polymolécularité plus faible) qu'en radicalaire classique et aussi et surtout, de synthétiser des copolymères à blocs en redémarrant la polymérisation avec un nouveau monomère à partir d'une espèce polymère « dormante ».

En principe, tout procédé de polymérisation radicalaire vivante, compatible avec le choix des monomères, peut être utilisé pour préparer un copolymère à blocs. Une méthode préférée est la polymérisation radicalaire contrôlée en présence d'un médiateur nitroxyde, puisqu'elle permet de polymériser une grande variété de monomères notamment les monomères acryliques et les monomères acryliques fonctionnalisés au moyen de groupes carboxyles. On pourra à cet effet utiliser par exemple les procédés utilisant en tant que radicaux libres stables les nitroxydes tels que le SG1 ou ses dérivés alcoxyamines tels qu'ils sont décrits dans les documents EP 0 970 973, WO 00/49027, WO 2005/082945 et EP 1527079. Un amorceur de polymérisation radicalaire contrôlée préféré est l'alcoxyamine de formule (I) suivante : 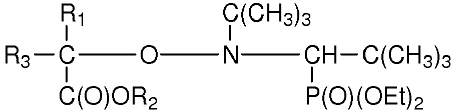 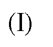 dans laquelle :
* R1 et R3, identiques ou différents, représentent un groupe alkyle, linéaire ou ramifié, ayant un nombre d'atomes de carbone allant de 1 à 3 ;
* R2 représente un atome d'hydrogène, un groupe alkyle, linéaire ou ramifié, ayant un nombre d'atomes de carbone allant de 1 à 8, un groupe phényle, un métal alcalin tel que Li, Na, K, un ion ammonium tel que NH4⁺, NHBu³⁺ ; de préférence R₁ et R₃ étant CH₃ et R₂ étant H, l'abréviation « Bu » signifiant le groupe butyle.

Une alcoxyamine utilisable pour concevoir les copolymères dibloc de l'invention, désignée sous le nom de BlocBuilder®, répond à la formule (II) suivante, dans laquelle l'abréviation « Et » signifie un groupe éthyle :

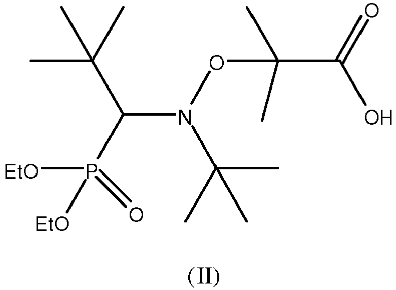

La polymérisation se déroule en général en plusieurs étapes selon le schéma général suivant :
- dans une première étape, on effectue la polymérisation du premier monomère ou mélange de monomères comprenant au moins un monomère hydrophile pour former un macroamorceur ou précurseur ;
- dans une deuxième étape, on réalise la polymérisation du second bloc constitué par un monomère ou un mélange de monomères comprenant au moins un monomère ayant un groupe carboxyle, à l'extrémité du macroamorceur.

L'utilisation de ce procédé permet la synthèse des copolymères dibloc selon l'invention en solution, en suspension, en masse, en solvant organique ou en émulsion ce qui permet alors d'obtenir les produits sous la forme d'un latex aqueux comprenant une émulsion stable dans l'eau de ces copolymères.

Le solvant organique, lorsqu'il est nécessaire pour la mise en œuvre d'un mode de polymérisation, peut être choisi parmi le toluène, le xylène, le chloroforme, l'acétate d'éthyle, la méthyléthylcétone, le dioxanne, le tétrahydrofuranne ou le diméthylformamide.

Le procédé de l'invention est conduit généralement à une pression pouvant aller de 0,5 à 20 bars et à une température pouvant aller de 50 à 180°C, et de préférence de 90 à 110°C.

Les copolymères dibloc obtenus ont des masses moléculaires et des distributions de la masse moléculaire contrôlées. Avantageusement, la masse moléculaire moyenne en poids *M̅w̅* du copolymère dibloc est comprise entre 10 000 et 1 000 000 g/mol, de préférence entre 50 000 et 300 000 g/mol. La masse moléculaire moyenne en nombre *M̅n̅* est de préférence comprise entre 10000 et 50000.

La distribution de la masse moléculaire ou indice de polydispersité *M̅w̅* / *M̅n̅* est en général inférieure à 4, avantageusement inférieure à 2, et de préférence inférieure ou égale à 1,5. Les masses *M̅w̅* et *M̅n̅* de la présente invention sont exprimées en équivalent polyéthylène glycol et mesurées par Chromatographie d'Exclusion Stérique, SEC, technique également connue sous le nom de GPC pour l'abréviation en anglais de Chromatographie de Perméation de Gel.

Les copolymères de l'invention, qui comprennent majoritairement des monomères hydrosolubles, peuvent notamment être utilisés comme agents dispersants notamment de pigments ou charges minérales en milieu aqueux. Ils permettent notamment de donner une bonne fluidité à des dispersions aqueuses de particules minérales, et plus particulièrement à des compositions à base de liants hydrauliques comme le ciment et le plâtre.

Les copolymères dibloc selon l'invention peuvent également servir comme dispersants ou co-stabilisants d'émulsions de produits organiques, tels que le bitume. Ils permettent, en combinaison avec des tensioactifs classiques de rendre plus stables dans le temps ces émulsions.

Ces copolymères peuvent trouver leur application dans la formation de films nanoporeux ou encore comme ingrédient de peinture antisalissure.

L'invention concerne également les compositions aqueuses chargées et/ou pigmentées contenant le copolymère selon l'invention. Les compositions aqueuses chargées et/ou pigmentées sont plus particulièrement celles qui, outre le copolymère selon l'invention, contiennent une charge minérale telle que le carbonate de calcium, les argiles, les oxydes de fer, les silico-aluminates de sodium ou zéolithes et/ou un ou plusieurs colorants et éventuellement un liant naturel ou synthétique ainsi qu'éventuellement d'autres constituants comme des dispersants, des agents de coalescence, des biocides, des tensio-actifs, des antimousses.

Parmi toutes ces compositions aqueuses, contenant le copolymère selon l'invention, on peut par exemple citer les compositions cosmétiques, les pâtes d'impression textile, les suspensions aqueuses de zéolithes, les fluides de forage en particulier à l'eau, les formulations de crème à récurer, les formulations de détergence, les peintures et autres compositions de revêtement.

Selon un mode de réalisation, le bloc élastomérique contient de l'acrylate de butyle (BA) et du méthacrylate de méthoxypolyéthylène glycol (MAMPEG) et le bloc thermoplastique contient de l'acrylate de butyle, de l'acide méthacrylique (AMA) et du styrène (S) formant un copolymère dibloc P(BA - MAMPEG)- b -P(BA- S - AMA).

### EXEMPLES

Les exemples suivants illustrent l'invention sans la limiter.

### Exemple 1 - Synthèse d'un copolymère P(BA - MAMPEG) - b - P(BA - S - AMA)

La synthèse de ce copolymère dibloc a lieu en deux étapes :
1^{er} bloc P(BA - MAMPEG) en masse puis stripping des monomères n'ayant pas réagi
2^{nd} bloc P(BA - S - AMA) en solvant

### 1.1. Synthèse du bloc P(BA - MAMPEG)

La synthèse de ce premier bloc est réalisées par un procédée de polymérisation en masse au moyen d'un réacteur de type Ingénieur Büro

**Réactifs :**

| | |
|---|---|
| - acrylate de butyle (BA) | 624 g |
| - méthacrylate de méthoxypolyéthylène glycol (MAMPEG) | 126 g |
| - BlocBuilder® | 8,26 g |

On vise une masse moléculaire en nombre de 27 000 g/mol à 75% de conversion.

Les réactifs sont pesés puis mélangés sous agitation magnétique, on les introduit ensuite dans le réacteur par dépression. Le réacteur est mis sous agitation (250 tr/min). On dégaze le milieu en alternant trois une pression d'azote et le vide. La polymérisation se fait en trois paliers de température : 90°C pendant 60 min puis 100°C pendant 90 min puis 110°C - La durée de polymérisation est de 345 min. La conversion est suivie par extraits secs on prélève toutes les heures des échantillons. Le MAMPEG n'étant pas volatil seule la conversion de l'acrylate de butyle peut être suivie par mesure de taux de solide (thermobalance 125°C et étuve sous vide 125°C).

Quand la conversion visée est atteinte on baisse la température à 80°C. Une fois la consigne atteinte on va progressivement mettre l'équipement sous vide, les monomères non réagis vont être distillés (récupération dans pièges à azote liquide). On reste environ 90 min à 80°C et sous vide maximal, quand la distillation est terminée on baisse la consigne à 40°C, une fois cette consigne atteinte on introduit 400 g d'éthanol (par dépression) afin de diluer le milieu. On laisse quelques heures sous agitation et à 40°C afin de bien homogénéiser la solution. Cette solution est ensuite récupérée.

### 1.2. Synthèse du bloc P(BA - S - AMA)

On travaille en procédé solvant, en utilisant un mélange éthanol / toluène ayant un ratio massique de 60 / 40. On travaille avec 45% de solvant par rapport à la charge totale.

On introduit un mélange BA / S / AMA ratio massique 30 / 30 / 40.

On vise un copolymère P(BA - MAMPEG) - b - P(BA - S- AMA) de composition massique 30/70 avec une conversion du 2^{nd} bloc de 65%.

La charge est préparée comme indiquée ci-dessous :
1^{er} bloc dilué dans éthanol : 200 g
BA / S / AMA : 104 / 104 / 138,7 (g)
Ethanol / Toluène : 138,4 / 161,2 (g)

Les masses molaires (équivalent PS) de ce copolymère sont les suivantes :
Mp=93600 g/mom
Mn=55100 g/mol
Mw=97300 g/mom
Ip=l,77

### Exemple 2 - Mesure de la solubilité en milieu aqueux du copolymère dibloc P(BA - MAMPEG) - b - P(BA - S - AMA)

Pour le test de solubilité, une pastille d'un diamètre de 20 mm et d'une épaisseur de 1mm est réalisée avec une presse et sous une température de 120°C.

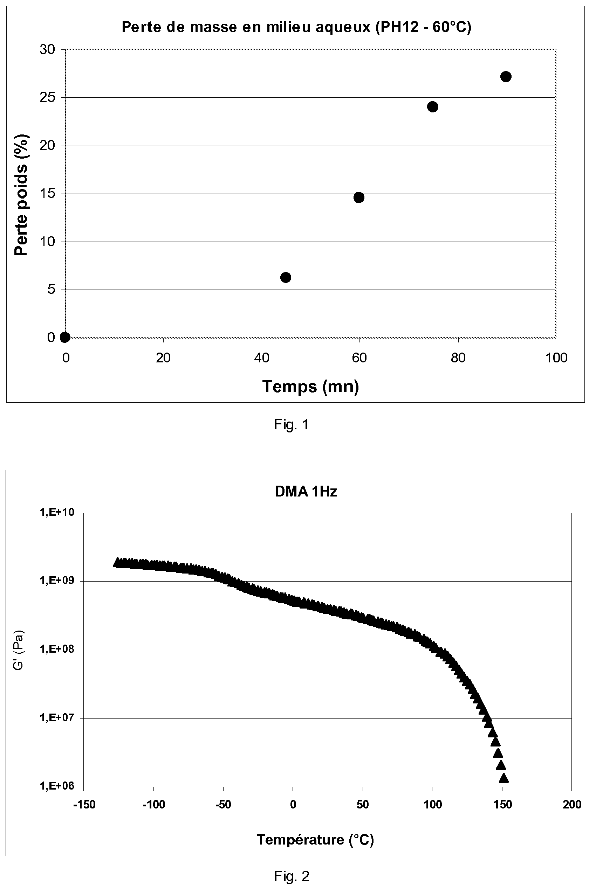

La pastille est mise dans un milieu aqueux légèrement agité et des mesures de perte de masse sont réalisées en fonction du temps. Les résultats obtenus sont représentés dans la figure 1 annexée.

On observe une dissolution de l'échantillon avec une vitesse de perte de masse de l'ordre de 0,25% par minute.

### Exemple 3 - mesure du module élastique de cisaillement (G') par analyse mécanique dynamique (DMA : Dynamic Mecanical Analysis) du copolymère dibloc P(BA - MAMPEG) - b - P(BA - S - AMA)

Les module élastique de cisaillement est mesuré au moyen d'un rhéomètre de type ARES à déformation imposée (TA Instrument). On prépare par moulage un barreau rectangulaire de dimensions 40x10x2mm. L'analyse (balayage en température à une fréquence de 1Hz) se fait sur une géométrie de type torsion rectangulaire.

Les variations de module G' en fonction de température (de -80 à 150°C) sont présentées sur la figure 2.

On observe qu'à température ambiante l'on mesure un module élastique G' d'environ 4.10⁸Pa, ce qui témoigne d'un comportement de type thermoplastique du copolymère selon l'invention.

## Revendications

1. Copolymère à blocs consistant en :
- un bloc élastomérique, partiellement ou totalement hydrophile, ayant une Tg inférieure à 30°C et comprenant au moins un monomère hydrophile, et
- un bloc thermoplastique hydrosoluble ayant une Tg supérieure à 30°C et comprenant au moins un monomère ayant un groupe carboxyle,
ledit copolymère étant partiellement ou totalement soluble dans l'eau ou en milieu aqueux, et la proportion massique du bloc thermoplastique étant supérieure à 50% du poids dudit copolymère, le dit copolymère étant de structure P(BA-MAMPEG)-b-P(BA- S - AMA) et étant extrudable et granulable.

2. Copolymère selon la revendication 1 dans lequel le taux massique de monomères portant des fonctions carboxyle dans le copolymère dibloc varie de 10 à 40%, de préférence de 20 à 35% par rapport au poids dudit copolymère.

3. Copolymère selon l'une des revendications 1 à 2 dans lequel la proportion massique du bloc thermoplastique est supérieure à 60% du poids dudit copolymère.

4. Copolymère selon l'une des revendications 1 à 3, ledit copolymère ayant un module élastique de cisaillement G' supérieur à 10⁸ Pa à température ambiante.

5. Procédé de préparation d'un copolymère à blocs selon l'une des revendications 1 à 4 par polymérisation radicalaire contrôlée en présence d'un médiateur nitroxyde.

6. Procédé selon la revendication 5 dans lequel l'amorceur de polymérisation est l'alcoxyamine de formule II:

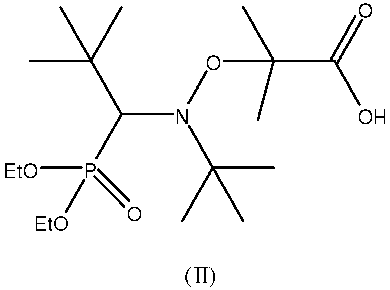

7. Utilisation d'un copolymère à blocs selon l'une des revendications 1 à 4 comme agent dispersant notamment de pigments ou de charges minérales en milieu aqueux.

8. Utilisation d'un copolymère à blocs selon l'une des revendications 1 à 4 comme dispersant ou co-stabilisant d'émulsions de produits organiques, tels que le bitume.

9. Composition aqueuse chargée et/ou pigmentée comprenant un copolymère à blocs selon l'une des revendications 1 à 4, une charge minérale telle que le carbonate de calcium, les argiles, les oxydes de fer, les silico-aluminates de sodium ou zéolithes et/ou un ou plusieurs colorants et éventuellement un liant naturel ou synthétique ainsi qu'éventuellement d'autres constituants comme des dispersants, des agents de coalescence, des biocides, des tensio-actifs ou des antimousses.

10. Composition selon la revendication 9 choisie parmi les compositions cosmétiques, les pâtes d'impression textile, les suspensions aqueuses de zéolithes, les fluides de forage, les formulations de crème à récurer, les formulations de détergence, les peintures et autres compositions de revêtement.

## Patentansprüche

1. Blockcopolymer, bestehend aus:
- einem teilweise oder vollständig hydrophilen elastomeren Block, der eine Tg von weniger als 30 °C aufweist und mindestens ein hydrophiles Monomer umfasst, und
- einem wasserlöslichen thermoplastischen Block, der eine Tg von mehr als 30 °C aufweist und mindestens ein Monomer mit einer Carboxylgruppe umfasst,
wobei das Copolymer teilweise oder vollständig in Wasser oder in wässrigem Medium löslich ist und der Massenanteil des thermoplastischen Blocks mehr als 50 % des Gewichts des Copolymers beträgt, wobei das Copolymer die Struktur P(BA-MAMPEG)-bP(BA-S-AMA) aufweist und extrudierbar und granulierbar ist.

2. Copolymer nach Anspruch 1, wobei der Massengehalt an Monomeren mit Carboxylfunktionen in dem Diblockcopolymer von 10 bis 40 %, vorzugsweise von 20 bis 35 %, bezogen auf das Gewicht des Copolymers, variiert.

3. Copolymer nach einem der Ansprüche 1 bis 2, wobei der Massenanteil des thermoplastischen Blocks mehr als 60 % des Gewichts des Copolymers beträgt.

4. Copolymer nach einem der Ansprüche 1 bis 3, wobei das Copolymer bei Umgebungstemperatur einen Schubmodul von mehr als 10⁸ Pa aufweist.

5. Verfahren zur Herstellung eines Blockcopolymers nach einem der Ansprüche 1 bis 4 durch kontrollierte radikalische Polymerisation in Gegenwart eines Nitroxid-Mediators.

6. Verfahren nach Anspruch 5, wobei es sich bei dem Polymerisationsinitiator um das Alkoxyamin der Formel II handelt:

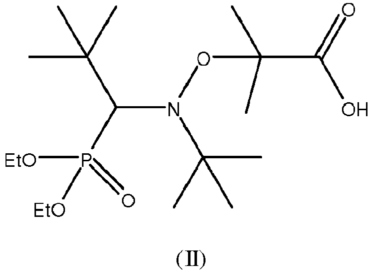

7. Verwendung eines Blockcopolymers nach einem der Ansprüche 1 bis 4 als Dispergiermittel, insbesondere für Pigmente oder anorganische Füllstoffe in wässrigem Medium.

8. Verwendung eines Blockcopolymers nach einem der Ansprüche 1 bis 4 als Dispergiermittel oder Costabilisator für Emulsionen von organischen Produkten, wie Bitumen.

9. Füllstoffhaltige und/oder pigmenthaltige wässrige Zusammensetzung, umfassend ein Blockcopolymer nach einem der Ansprüche 1 bis 4, einen anorganischen Füllstoff wie Calciumcarbonat, Tone, Eisenoxide, Natriumaluminosilikate oder Zeolithe und/oder einen oder mehrere Farbstoffe und gegebenenfalls ein natürliches oder synthetisches Bindemittel sowie gegebenenfalls andere Bestandteile wie Dispergiermittel, Koaleszenzmittel, Biozide, Tenside oder Antischaummittel.

10. Zusammensetzung nach Anspruch 9, ausgewählt aus kosmetischen Zusammensetzungen, Textildruckpasten, wässrigen Suspensionen von Zeolithen, Bohrspülungen, Scheuercremeformulierungen, Reinigungsmittelformulierungen, Anstrichmitteln und anderen Beschichtungszusammensetzungen.

## Claims

1. Block copolymer consisting of:
- a partially or totally hydrophilic elastomeric block, with a Tg of less than 30°C and comprising at least one hydrophilic monomer, and
- a water-soluble thermoplastic block with a Tg of greater than 30°C and comprising at least one monomer bearing a carboxyl group,
said copolymer being partially or totally soluble in water or in aqueous medium, and the mass proportion of the thermoplastic block being greater than 50% of the weight of said copolymer, said copolymer being of structure P(BA-MPEGMA)-b-P(BA-S-MAA) and being extrudable and granulable.

2. Copolymer according to Claim 1, in which the mass content of monomers bearing carboxyl functions in the diblock copolymer ranges from 10 to 40%, preferably from 20 to 35%, relative to the weight of said copolymer.

3. Copolymer according to either of Claims 1 and 2, in which the mass proportion of the thermoplastic block is greater than 60% of the weight of said copolymer.

4. Copolymer according to one of Claims 1 to 3, in which said copolymer has an elastic shear modulus G' of greater than 10⁸ Pa at room temperature.

5. Process for preparing a block copolymer according to one of Claims 1 to 4 by controlled radical polymerization in the presence of a nitroxide mediator.

6. Process according to Claim 5, in which the polymerization initiator is the alkoxyamine of formula II:

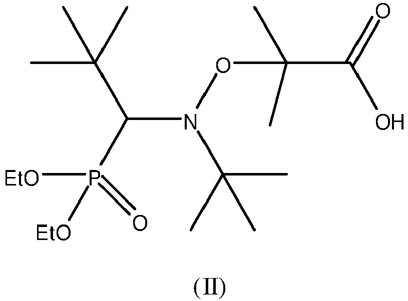

7. Use of a block copolymer according to one of Claims 1 to 4, as a dispersant especially for pigments or mineral fillers in aqueous medium.

8. Use of a block copolymer according to one of Claims 1 to 4, as a dispersant or co-stabilizer for emulsions of organic products, such as bitumen.

9. Filled and/or pigmented aqueous composition comprising a block copolymer according to one of Claims 1 to 4, a mineral filler such as calcium carbonate, clays, iron oxides, sodium silico-aluminates or zeolites and/or one or more colourants and optionally a natural or synthetic binder and also optionally other constituents such as dispersants, coalescers, biocides, surfactants or antifoams.

10. Composition according to Claim 9, chosen from cosmetic compositions, textile printing pastes, aqueous suspensions of zeolites, drilling fluids, cream formulations for scouring, detergency formulations, paints and other coating compositions.
